# EUROPEAN PATENT APPLICATION

(11) **EP 1 514 843 A1**
(43) Date of publication of application: **16.03.2005**
(21) Application number: 03077916.9
(22) Date of filing: 15.09.2003
(51) Int. Cl.: C01B 33/44, C08K 9/04

(54) **Synthetic organoclay materials**

(71) Applicant: ENGELHARD CORPORATION, Iselin, New Jersey 08830-0770 (US)
(72) Inventor: Roelofs, Jules Caspar Albert Anton, 3584 HH Utrecht (NL)
(74) Representative: Prins, Adrianus Willem, Mr. Ir.

(57) **Abstract**

The invention is directed to synthetic cationic organoclay material, to the use thereof in nanocomposites and to the production thereof.

## Description

### Background of the invention

The present invention is directed to synthetic organoclay materials that are based on a clay and organic materials, to a process for producing them and to the use thereof in various applications. The materials can be added to a wide variety of polymer, plastic and resin matrices to form inventive nanocomposite materials of enhanced structural strength. They can also be used as rheological additives, as flame retardant additive, or in water purification applications.

### Synthetic clay materials

Clay minerals are solid substances, substantially made up of metal and oxygen atoms, whose crystal lattice has a layered structure. This layered structure consists of three repeating layers. Located centrally in this elementary three-layer structure is a layer of substantially trivalent or substantially divalent metal ions (cations). Examples of clay minerals with substantially trivalent ions are montmorillonite and beidellite; examples of clay minerals with substantially divalent ions are hectorite and saponite. The metal ions present in the central layer are octahedrally surrounded by oxygen and hydroxyl ions. In a clay mineral with trivalent ions, two of the three octahedron positions are occupied by metal ions. Accordingly, this is referred to as a di-octahedral clay mineral. In a clay mineral with divalent metal ions, all three octahedron positions are occupied by metal ions; this is referred to as a tri-octahedral clay mineral. On opposite sides of this layer of octahedrally surrounded metal ions occurs a layer of tetrahedrally surrounded ions. These tetrahedrally surrounded ions are generally silicon ions, while a part of the silicon can optionally be replaced by germanium, aluminium, boron and the like.

The unit of the tetrahedrally surrounded silicon ions is Si₈O₂₀ (OH)₄. In this connection it is noted that in the tetrahedron and octahedron layers the actual point where the charge is located cannot always be indicated equally clearly. The term 'ions' as used in this context accordingly relates to the situation where an atom, given a completely ionic structure, should possess an electrostatic charge corresponding with the oxidation state.

Essential to clay minerals is that a part of the cations present are substituted by ions of a lower valency or a vacancy, i.e. absence of an ion. Thus it is possible to substitute a part of the trivalent or divalent metal ions in the octahedron layer by divalent and monovalent metal ions, respectively, or to remove ions completely.

With substantially trivalent metal ions, this substitution results in montmorillonite and with substantially divalent metal ions in hectorite. In case the material comprises divalent metal ions in the octaedral layer with vacancies, the clay is a stevensite.

It is also possible to substitute the tetravalent silicon ions in the tetrahedron layers by trivalent aluminum, germanium or boron ions. With a clay mineral with almost exclusively trivalent ions in the octahedron layer, the result is then a beidellite and with a clay mineral having almost exclusively divalent ions in the octahedron layer, the result is a saponite.

Of course, substitution by an ion of lower valency or deletion of an ion leads to a deficiency of positive charge of the platelets. This deficiency of positive charge is compensated by including cations between the platelets. Generally, these cations are included in hydrated form, which leads to the swelling of the clay. The distances between the three-layer platelets is increased by the inclusion of the hydrated cations. This capacity to swell by incorporating hydrated cations is characteristic of clay minerals.

The swelling clay minerals having a negative charge of from 0.4 to 1.2 per unit cell, are known as smectites. The cations in the interlayer of swollen clay minerals are strongly hydrated. As a result, these ions are mobile and can be readily exchanged.

One of the major problems in the use of natural clay minerals is moreover that although these materials may be very cheap, the properties are very difficult to control. The synthesis of clay minerals according to the current state of the art is technically difficult. Customarily, a protracted (a few weeks) hydrothermal treatment is used at relatively high temperatures and pressures, under agitation of the aqueous suspension. In general, only a few grams or even only some tens of milligrams of a clay mineral can be synthesized simultaneously. The application of this technology on a large (industrial) scale is very difficult, if not impossible. As a result, synthetic clay minerals are costly. An example of such a synthesis, in this case of hectorite, is given in U.S. Pat. No. 3,666,407. Because hectorite has especially interesting rheological properties and does not occur much in nature, the synthesis of this mineral is of interest. This preparation starts from natural talc, which contains magnesium, oxygen and silicon and which occurs amply in nature in pure form. This material, after being crushed and mixed with lithium carbonate, is heated at 760 to 980 C. for approximately 1 hour. After cooling, water glass and soda are added and for 8 to 16 hours the mixture thus obtained is treated hydrothermally, i.e. at high temperature and high pressure, under agitation of the preparation. It is clear that this is a relatively costly preparative procedure. This also applies to the method for the preparation of synthetic clay minerals discussed in U.S. Pat. No. 3,671,190. In this patent it is observed that the preparative procedures thus far known have only been carried out on a laboratory scale and often yield only milligrams of the desired clay mineral which moreover is often polluted with quartz.

In the method of U.S. Pat. No. 3,671,190, magnesium and silicon are coprecipitated by mixing water glass with a solution of a magnesium salt. The suspension thus obtained is then treated hydrothermally. To that end, the mixture is maintained under pressure at 250 C. for about 4 hours with stirring. It is difficult to control the degree of crystallization and hence the dimensions of the crystallites. Owing to the poorly controllable properties of natural clay minerals and the high price of synthetic clay minerals, the use of clay minerals for catalytic purposes has remained quite limited. Although the patent literature around 1980 evidenced much research effort in the field of the catalysis of (pillared) clay minerals, the technical application thereof has remained very slight.

In WO-A96-07613 a process has been described for producing synthetic swelling clay minerals.

### Organoclay materials

Organically modified clays, also called organoclays, have been used for many years as rheological additives for solvent based systems. They are usually produced by making a water dispersion of a naturally occurring phyllosilicate clay, usually a smectite clay, and adding to it a quaternary ammonium salt of a long chain fatty acid to produce an organically modified clay by cation exchange reaction and adsorption.

The reaction may cause the organoclay to coagulate from the water dispersion which allows for its isolation by filtration and washing. Similarly, organoclays can be made without water by extrusion mixing, with heat and shear, smectite clay and the quaternary ammonium compound or compounds with no water or other solvent being present. This process usually produces an organoclay of lower quality however, since, among other reasons, the final product still has salt reaction byproducts that cannot be washed or readily isolated from the organoclay and for other reasons.

The clays are typically smectite clays which are layered phyllosilicates. Smectite clays possess some structural characteristics similar to the more well-known minerals talc and mica. Their crystal structures consist of two-dimensional layers formed by fusing two silica tetrahedral sheets to an edge-shared dioctahedral or trioctahedral sheet of either alumina (for example montmorilonite) or magnesia (for example hectorite)--each of the different smectite clays having somewhat different structures.

Polymers, resins and plastics containing clay additives have recently become widely used as replacements for heavier steel and other metal products, especially in the field of automotive manufacturing. They have also found use in a growing number of other areas including as bridge components and as replacements for heavier steel parts in ship construction. Using extrusion and injection molding, a nylon matrix, for example, has been successfully reinforced with smectite-type clays (and organoclays based on the smectite clays, bentonite and hectorite) dispersed therein to form molecular composites of nylon and finely dispersed silicate clay platelet layers. Such products, often called nanocomposites, have enhanced structural, tensile, impact and flexural strength.

The behavior of the resultant plastic/clay product (or nanocomposite) is qualitatively different from that exhibited by the plastic, polymer or resin alone and has been attributed by some workers in the field to the confinement of the matrix chains between the clay's millions of microscopic layers. It has long been known that bentonite and hectorite are clays which are composed of flat silicate platelets of a thickness no more than about one nanometer.

Organoclay materials have been used extensively as plastics additives as reological and/or flame retardant additives, or in water purification.

Early work using organoclays in the preparation of nanocomposites is reflected in U.S. Pat. No. 2,531,396. This patent filed in 1947 teaches the use of organically modified bentonites to provide structural reinforcement to elastomers, such as rubber, polychloroprene and polyvinyl compounds. Over a generation later, additional patents begin to appear. A number of patents obtained by Toyota starting in 1984: U.S. Pat. Nos. 4,472,538; 4,739,007; 4,810,734; 4,889,885; and 5,091,462 use organoclay additives for plastics and describe plastic structures commercially used, for example, to replace steel components in automobiles.

Organoclay compositions useful as rheological additives which comprise the reaction product of smectite clay, quaternary ammonium compounds and organic anions wherein a quaternary-organic anion complex is intercalated with the smectite clay― have for example been described in U.S. Pat. No. 4,412,018. As organic anions a large variety of organic compounds are described, including carboxylic acids, capable of reacting with the quaternary used.

Manufacture to date of nanocomposite materials has often involved mixing an organoclay with a polymer powder, pressing the mixture into a pellet, and heating at the appropriate temperature. For example, polystyrene has been intercalated by mixing polystyrene with an alkylammonium montmorillonite and heating in vacuum. Temperature of heating is chosen to be above the bulk glass transition temperature of polystyrene ensuring polymer melt.

U.S. Pat. Nos. 5,514,734 and 5,385,776-- are in general directed toward a nylon 6 matrix and clays using non-standard organic modifications. See also in this regard Vaia et al., the article entitled Synthesis and Properties of Two-Dimensional Nano Structures By Direct Intercalation of Polymer Melts in Layered Silicates, Chemistry of Materials 1993, 5, pages 1694-1696.

General Electric Company U.S. Pat. No. 5,530,052 describes silicate materials, including montmorillonite clays, modified with at least one heteroaromatic cation and used as additives to specified polymers to make nanocomposites.

Other prior art shows making polymer-clay intercalates directly by reaction of the monomers in the presence of clays. See Interfacial Effects On The Reinforcement Properties Of Polymer Organoclay Nanocomposites, H Shi, T Lan, T H Pinnavaia, Chemistry of Materials, 1996, pages 88 et seq.

However, these materials are all based on naturally occurring clay minerals with the inherent disadvantage of fluctuation in purity and composition.

The current production of organoclay materials involves various process steps, including purification of the natural clay in a diluted slurry, ion exchange of the clay to include the cationic organic compound in the clay, filtration and the like.

What has escaped scientists is an inexpensive and easy way to make an organoclay material that can easily and economically be produced and isolated in high purity and uniformity and also can be simply processed into a polymer, plastic or resin matrix to form a nanocomposite.

### Summary of the invention

It is an object of the invention to provide novel organoclay materials that are suitable for use in nanocomposites and other applications.

In a first embodiment the invention is directed to synthetic cationic organoclay materials

In a further embodiment the organoclay materials comprise an elementary swelling clay-structure of three repeating layers, with centrally in this elementary three-layer structure a layer of substantially trivalent or substantially divalent metal cations, octahedrally surrounded by oxygen and/or hydroxyl ions, and on both sides of said octahedrally surrounded layer, layers of tetrahedrally surrounded tetravalent cations, wherein at least part of the cations have been replaced by cations of lower valency, and/or wherein cations in the octahedrally surrounded layer have been complete removed, thereby creating vacancies, and wherein the said elementary three-layer structure further contains one or more organic cations, generally located between the layers or on the basal surface of the three layer structure.

The clay materials are made up of elementary three-layer platelets consisting of a central layer of octahedrally oxygen-surrounded metal ions (octahedron layer), which layer is surrounded by two tetrahedrally surrounded, tetravalent ions, such as silicon -containing layers (tetrahedron layers), and a number of such elementary platelets being optionally stacked. The dimensions of the clay platelets generally vary from 0.01 µm to 1 µm, the number of the stacked elementary three-layer platelets varies from one platelet to on average twenty platelets, while in the octahedron layer at most 30 at. % of the metal ions has been replaced by ions of a lower valency or a vacancy and in the tetrahedron layers at most 15 at. % of the tetravalent ions has been replaced by ions of a lower valency or a vacancy, such a replacement having taken place in at least one of these layers and these layers having a deficiency of positive charge because of the replacement.

This deficiency of positive charge is compensated by protons and/or cations, including organic cations which are present between the platelets. According to the invention, it is essential that at least a part of the octahedrally and/or the tetrahedrally surrounded ions have been replaced by other ions of lower valency or a vacancy.

In a first embodiment, the trivalent ions in the octahedron layer can be replaced by divalent ions or vacancies. If the octahedron layer is made up of divalent ions, a part thereof can be replaced by lithium ions or vacancies. In a second embodiment, the silicon (germanium) in the tetrahedron layer can be replaced by trivalent ions. It is also possible to have a replacement or vacancy in the octahedron layer as well as a replacement in the tetrahedron layer. In the case where a clay mineral is synthetized with an octahedron layer based on divalent ions and with a substitution of trivalent ions in the tetrahedron layer, a slight substitution of trivalent ions may also occur in the octahedron layer. However, the net charge of the elementary platelets will always be negative, i.e. there is a deficiency of positive charge in the platelets. In this connection, it is observed that the term 'replacement' or 'substitution' is employed in the meaning that a change has occurred relative to the ideal structure. After all, typically, in practice both components (ions of higher and lower valency) will simultaneously be presented during the preparation of the clay minerals. In the octahedron layer, aluminum, chromium, iron(III), cobalt(III), manganese(III), gallium, vanadium, molybdenum, tungsten, indium, rhodium and/or scandium are preferably present as trivalent ions. As divalent ions, magnesium, zinc, nickel, cobalt(II), iron(II), manganese(II), and/or beryllium are preferably present in the octahedron layer. This may be the component of the higher valency as well as the component of the lower valency. In the tetrahedron layer, silicon and/or germanium is present as tetravalent component and preferably aluminum, boron, gallium, chromium, iron(III), cobalt(III) and/or manganese(III) are present as trivalent component. A part of the hydroxyl groups present in the platelets can partly be replaced by fluorine.

In a preferred embodiment of the invention the synthetic organoclay material belongs to the group of smectites, more in particular it is a stevensite, with Zn,Mg,Co,Ni or combinations thereof in the octahedral layer. Stevensite N_{x/z}^{z+}[M²⁺₆₋ₓ•ₓ][Si₈]O₂₀(OH)₄.nH₂O belongs to the class of trioctahedral smectites and consists of octahedrally coordinated divalent metal ions with vacancies, covered on both sides with a tetrahedral sheet of SiO₄ tetrahedra. Interlayer cations are present for charge compensation.

The advantages of these materials reside among others in the better dispersibility, presumably due to the relatively low charge density, and a much easier synthesis.

The preparation of the synthetic clay minerals according to the invention is surprisingly simple. In the widest sense. The components required for the synthesis, oxides of silicon (germanium) for the tetrahedron layer and the tri/di/monovalent ions for the octahedron layer, are presented in aqueous medium, optionally in combination with the cationic organic compound, are brought to the desired pH. An initial pH of between 0.5 and 2.5 is preferred. Above this range the preparation of, especially the stevensites, results in less optimal products. The materials are maintained for some time at a temperature of 60-350 C., with the pH being maintained within the desired range. The reaction time strongly depends on temperature, and hence on pressure, with higher temperatures enabling shorter reaction times. In practice, reaction times to the order of 1-72 hours are found at the lower temperatures, 60-125 C., whereas at temperatures in the range of 150 C. and higher, reaction times to the order of some minutes to approximately 2.5 hours may suffice. Preparation of Mg based materials require a longer reaction time than materials based on zinc.

Such a process can be carried out in a number of manners, depending on the nature of the components and the desired result.

In accordance with a first variant, the starting products for the preparation are mixed as a solution, including the cationic organic material, and the pH is adjusted to the range where the preparation is to take place. It is also possible to add the cationic organic compound at a later stage of the preparation.

During the following heating operation, the pH is kept substantially constant, for instance through hydrolysis of urea, injection of a neutralizing agent below the surface of the well-stirred liquid, or with electrochemical means.

However, for achieving a rapid and proper preparation, it is preferred to homogeneously increase the pH of a solution of the metal ions to be incorporated into the octahedron layer in the presence of silicon dioxide. It is preferred to use waterglass as the source of silicon dioxide. The source of the other metal ions is not very critical. This choice is mainly governed by aspects of costs and the specific anions, some of which are less easy to wash out of the final product, or may interfere with the specific application of the material.

In the presence of two different metal ions, these metal ions are incorporated into the octahedron layer side by side. The typical swelling clay structure is brought about by the presence of divalent and trivalent ions side by side in the octahedron layer. The temperature at which the pH is homogeneously increased influences the dimensions of the clay platelets formed. At higher temperatures, larger clay platelets are formed. Also the choice of the metal in the octahedral layer influences the size of the platelets. For example, the use of magnesium results in smaller sizes (length, thickness) of the plates than when zinc is used.

The stacking of the elementary clay platelets, i.e. the number of elementary three-layer systems, is determined by the ionic strength of the solution from which the precipitation takes place. At a higher ionic strength, which can be achieved through the addition of, for instance, sodium nitrate, the elementaire clay platelets are stacked more. The stacking of the elementary clay platelets is therefore controlled by setting the ionic strength of the solution wherein the reaction resulting in the clay minerals is carried out

The dimension of the elementary platelets of clay minerals having substantially zinc ions in the octahedron layer is approximately 0.05-0.2 µm, whereas the corresponding dimension in the case of substantially magnesium ions in the octahedron layer-is 0.01 to 0.03 µm.

The cationic organic material is present in the starting solution in such an amount that the final material contains between 5 and 35 wt.% of said material. The amount of organic material is mainly determined by the charge deficiency in the octahedral layer and the molecular weight of the cationic organic material.

Suitable cationic organic materials are the various protonated alkyl- aryl-, aralkyl- and alkarylamines (primary and secundary), alkyl aryl, aralkyl and alkaryl phosphonium compounds and alkyl aryl, aralkyl and alkaryl and sulphonium compounds. These compounds can optionally be substituted. The nature of the organic moiety determines the hydrophobic/hydrophilic balance of the final material, heavier moieties leading to more hydrophobic properties. It is to be noted that the alkyl- aryl-, aralkyl- and alkaryl moieties, optionally may be substituted.

In a preferred embodiment the process is used for producing zinc or magnesium stevensites (as described above), in which process the pH is adjusted during production by the homogeneous decomposition of urea in the solution. The cationic organic material is preferably octadecyl amine, used in protonated form.

After the preparation is finished, the product is separated from the aqueous phase, optionally after washing and dried.

With respect to the incorporation of the cationic organic material in the clay, various possibilities exist. In a preferred embodiment, the organic material is present already in the starting solution. For stevensites this has the surprising advantage of a very fast synthesis, even faster than a regular stevensite synthesis without the organic material being present.

However, it is also possible to add the organic material at some moment during the synthesis, for example after the start, but before about 75% of the synthesis time has passed. Finally it is to be noted that for organoclay stevensite preparation, it is also possible to include the organic material in the stevensite after the clay has been synthesized, using ion exchange techniques.

### Specific applications of organoclay materials

As indicated above, organoclay materials have various applications in industry, more in particular the materials can be added to a wide variety of polymer, plastic and resin matrices to form inventive nanocomposite materials of enhanced structural strength. They can also be used as rheological additives, as flame retardant additive, or in water purification applications.

The organoclay materials of the present invention have the advantageous property of being extremely homogeneous and easy to produce in a reliable manner, thereby leading to a much more homogeneous endproduct or use. Suitable polymers are selected from polyolefines, such as PP and PE, nylon, styrene polymers and vinylchloride polymers.

In the use as additive for plastics, the organoclay material can be added directly to the equipment in which the plastics is processed, such as an extruder. However, it is also possible to process the material first to a masterbatch, which masterbatch is subsequently added to the plastics processing equipment.

Ideally, during processing, the individual platelets will disperse uniformly into the polymer (exfoliation) giving the desired beneficial properties (increasing tensile strength, flexural modulus and heat distortion temperature while maintaining impact strength).

### Detailed embodiments

### Example

Water was added to 300 grams of water glass solution (27wt% SiO₂) up to a volume of 2.5 litre. 300 grams of both Zn(NO₃)*6H₂O and urea were added (Volume 3.3 litres) and the pH was adjusted with concentrated nitric acid to a value of around 1.5. The solution was added to a stirred stainless steel reactor, equipped with baffles and heated to 65-70°C. A hot solution of acidified dimethyloctadecylamine (ACROS, 87% 90 grams in 1-1.3 litre), around 25 ml of concentrated nitric acid was used to obtain a more or less clear solution) was poured into the solution. The mixture was heated to 90 °C and stirred for 18-22 h at 500 rpm. After washing and drying a white fine powder was obtained, hydrophobic of nature. Yield around 230-250 g.

Table 1 lists results calculated from the elemental analyses of two labscale products having different amounts of octadecylamine. Several conclusions can be drawn from these data: The Zn/Si ratio decreased due to the absence of Zn²⁺ in the interlayer for charge compensation. The C/N ratio found is around 19-20, related to the dimethyloctadecylammonium molecules (C₁₈C₂N) in the interlayer and on the platelet surface. All the Si initially present was recovered in the yield, whereas around 20 % of the Zn²⁺ had not reacted. However, this Zn²⁺ can be correlated to the C₁₈C₂N now present for charge compensation. Absence of every Zn²⁺ requires two molecules of C₁₈C₂N; consequently, an N⁺/ΔZn²⁺ ratio of two should be expected (See table, note 1). This is indeed the case, moreover, "recalculating" the Zn/Si ratio towards a Stevensite with interlayer Zn²⁺ resulted in values close to the theoretical value of 0.75. Thus, we synthesised a pure phase of organostevensite and the calculated Zn/Si ratio reflects the true layer ratio, lowered by presence of vacancies. SEM and TEM showing only one crystalline phase, confirmed this.

**Table 1:**

| Results (calculated) from elemental analysis. | | | | | | | |
|---|---|---|---|---|---|---|---|
| | Zn/Si | Reacted Si (%) | Reacted Zn (%) | C/N | N⁺/ΔZn²⁺⁽¹⁾ | "Real" Zn/Si ⁽²⁾ | CEC ⁽³⁾ (MEQ/100 g) |
| C₁₈C₂N (90)⁽⁴⁾ | 0.64 | 99 | 84 | 19.4 | 1.8 | 0.74 | 51 |
| C₁₈C₂N (150) ⁽⁴⁾ | 0.57 | 104 | 79 | 19.1 | 2.1 | 0.72 | 32 |

| | | | | | | | |
|---|---|---|---|---|---|---|---|
| ⁽¹⁾ ΔZn²⁺ is defined as the initial molar amount (at Zn/Si=0.75) minus the molar amount Zn²⁺ in the isolated dried material. | | | | | | | |
| ⁽²⁾ Molar amount calculated from elemental analysis: (Zn + 2* N)/Si. | | | | | | | |
| ⁽³⁾ Calculated via ΔZn²⁺and the definition of CEC: (elemental mass of Zn (g)/valence Zn²⁺)/1000 per 100 gram of clay material. | | | | | | | |
| ⁽⁴⁾ 90 and 150 represent the used amount of C18C2N in grams. | | | | | | | |

The amount of C₁₈C₂N also influences the Zn/Si ratio. The more C₁₈C₂N present, the more vacancies are created. Finally, the calculated Cation Exchange Capacity (CEC) is around 30-50, considerably lower than values for montmorillonite (typically 80-120 meq/100 gram clay). The synthesis procedure can also be applied using Mg²⁺ instead of Zn²⁺, although longer synthesis time is required..

TEM and SEM results show a platy morphology with increased interlayer space. Sizes vary from 40-100 nm, stacking is low. Dark field TEM confirms the high degree of crystallinity.

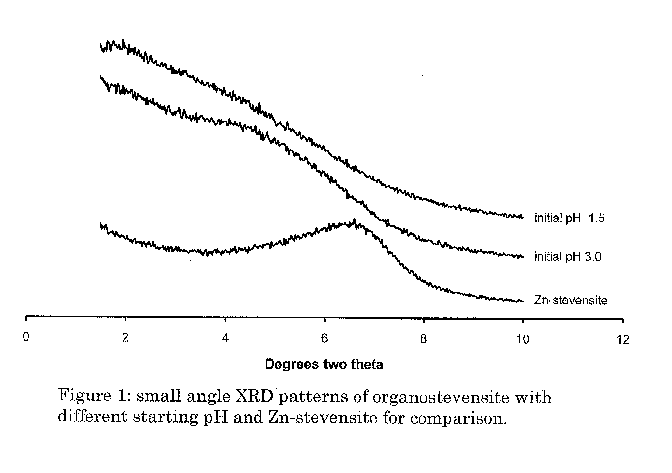

Interestingly, the XRD patterns from Figure 1 show broad 001 reflections, with low intensity as compared to commercial nanoclays like Somasif™ and Cloisite™, indicating that ordering in the c-plane (indicative for "thickness" or stacking number) is much lower in organostevensite, which could be favourable to achieve exfoliation in the final nanocomposite. The presence of C₁₈C₂N in the interlayer instead of Zn²⁺ resulted in a shift of the 001 reflection from 14 Å to 46 Å (broad peak at around 2 degree two theta). The effect of initial pH is also shown: at pH 3, a broad shoulder at 17-20 Å is present, indicative of a different intercalation. Likely, the presence of different stacked platelets contributes to a broader PSD, resulting in poor filtration properties. The BET surface areas are typically between 40-80 m²/g, with pores of 4 nm present. The higher the initial concentrations in the synthesis mixture, the more agglomeration is observed, resulting in an increase in the number of larger pores.

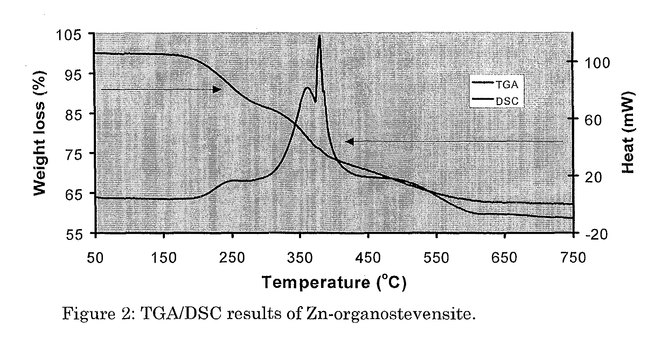

The results of the TGA/DSC measurements are depicted in Figure 2. About 30 wt% is lost when heating up to 800 °C, which can be ascribed to decomposing interlayer C₁₈C₂N molecules.

The first weight loss and corresponding heat release between 200-280 °C can be attributed to adsorbed, weakly bonded C₁₈C₂N possibly situated on the basal surfaces of the crystallites. At more elevated/higher temperatures, strongly bonded species start to decompose. The two peaks with maxima in DSC at 365 and 380 °C are not always present as two separate peaks (results not shown), they correspond with stronger bonded alkylammonium species.

## Claims

1. Synthetic cationic organoclay material.

2. Organoclay material according to claim 1, comprising an elementary swelling clay-structure of three repeating layers, with centrally in this elementary three-layer structure a layer of substantially trivalent or substantially divalent metal cations, octahedrally surrounded by oxygen and/or hydroxyl ions, and on both sides of said octahedrally surrounded layer, layers of tetrahedrally surrounded tetravalent cations, wherein at least part of the cations have been replaced by cations of lower valency, and/or wherein cations in the octahedrally surrounded layer have been complete removed, thereby creating vacancies, and wherein the said elementary three-layer structure further contains one or more organic cations.

3. Organoclay material according to claim 1 or 2, wherein the clay is selected form the group of montmorillonite, stevensite, beidellite, hectorite, smectite and saponite.

4. Organoclay material according to claim 1-3, wherein the organic compound is selected from protonated alkyl- aryl-, aralkyl- and alkarylamines (primary and secundary), alkyl aryl, aralkyl and alkaryl phosphonium compounds and alkyl aryl, aralkyl and alkaryl and sulphonium compounds, more in particular C₈-C₁₈ n-alkyl amine.

5. Zn-stevensite modified with an organic cation, preferably an alkylamine.

6. Nanocomposite material comprising a matrix material having dispersed therein a synthetic organoclay material according to any one of the claims 1-5.

7. Material according to claim 6, wherein the said matrix material is selected from nylon, polyolefines, such as PP and PE, styrene polymers and vinylchloride polymers.

8. Process for producing a synthetic cationic organoclay material according to any one of the claims 1-5, said procees comprising providing an aqueous liquid containing inorganic ions of the clay structure, or precursors therefor, if necessary adapting the pH of the liquid and heating the liquid at a temperature and for a period sufficient to generate the clay structure, said process further comprising adding organic cationic material to the aqueous liquid at the beginning or during the production process for the oragnoclay material.

9. Process according to claim 8, wherein the initial pH of the solution is between 0.5 and 2.5.

10. Process according to claim 8 or 9, wherein the cationic organic material is present in the said aqueous liquid containing inorganic ions of the clay structure, or precursors therefor.

11. Process according to claim 8 or 9, wherein the cationic organic material is added after the start of the synthesis, preferably before 75% of the synthesis time has passed.

12. Synthetic cationic organoclay material obtainable by the process of one or more of the claim 8-11.
